# EUROPEAN PATENT APPLICATION

(11) **EP 1 630 737 A1**
(43) Date of publication of application: **01.03.2006**
(21) Application number: 05018516.4
(22) Date of filing: 25.08.2005
(51) Int. Cl.: G06Q 10/00

(54) **Method and system for staffing**

(30) Priority: 31.08.2004 US 929553
(71) Applicant: SAP AG, 69190 Walldorf (DE)
(72) Inventor: Lang, Torsten I., 68647 Biblis (DE); Fell, Matthias, 69168 Wiesloch (DE); Goff, Edward G., 69190 Walldorf (DE); Staerck, Jutta, 69168 Wiesloch (DE); Wiedemann, Ralf, 68723 Schwetzingen (DE)
(74) Representative: Müller-Boré & Partner Patentanwälte

(57) **Abstract**

Methods and systems of resource planning are described. In one embodiment, a rule set, that defines an authority of a program planner to create at least one project role, is evaluated. A determination of organizational units of users are made, staffing states are modified, and users are disallowed from making changes to a project plan based on the evaluation of the rule set as a function of the staffing state. In another embodiment, a first command from a first user to modify a program structure is received and evaluated. The rule set specifies an authority of the first user to modify the program structure on a basis of a staffing state in a project planning process. A program structure is modified, as a result of a positive evaluation of the rule set, wherein modification includes populating the program structure with first data comprising a project structure and a project role.

## Description

### BACKGROUND

Business entities, particularly large corporations, make use of commercially available programs to assist them in the development of a project plan, the definition of project roles within that plan, and in the identification and assignment of resources needed to staff the project roles. The entire sequence of events may be referred to herein as a planning process. As used herein, a "resource" may be defined as a person that can be assigned to a project role within the planning process. A resource can become a project member.

Business entities use various programs embodying various methodologies to fulfill their planning process needs. The various methodologies require the entry of data to define the project plan and to identify and assign resources to fill project roles defined by the project plan. However, known methodologies implemented in known computer hardware and software are not adequate for today's professional service entities because the tasks related to specific functions in process planning stages are able to be performed by persons not necessarily qualified or familiar with the work required by the task. What is needed is a staffing process that restricts performance of tasks to certain entities based on the state of the staffing process.

### BRIEF DESCRIPTION OF THE DRAWINGS

FIG. 1 is a simplified block diagram of a system in accordance with an embodiment of the invention.
FIG. 2 illustrates the states of a project role within a staffing process in accordance with an embodiment of the invention.
FIG. 3 is a flow diagram of an exemplary scenario of a staffing process in accordance with an embodiment of the invention.
FIG. 4 is an illustration of a use case diagram of a staffing process with distributed responsibilities in accordance with an embodiment of the invention.

### DETAILED DESCRIPTION

The invention described herein provides a benefit to at least those entities performing resource planning for business projects and for professional services. A system, in accordance with the invention, may ensure that users having specific roles do not cross responsibilities into the roles of other users. Embodiments of the method and system of staffing described herein may be easily implemented, at least in part to the uniformity and definition of the roles described herein.

As used herein, the following roles (actors) may be defined as having tasks as indicated:
Project Planner - preferably responsible for definition of project structure, but has no staffing responsibility. That is, the Project Planner preferably does not perform any actions that are the responsibility of the Staffing Manager and/or the Candidate Manager.
Staffing Manager - preferably responsible for assignment of resources to project roles.
Candidate Manager - preferably responsible for identification of adequate resources for project roles.

Within an overall framework of resource planning, each of the three roles, Project Planner, Staffing Manager, and Candidate Manager, has a well-defined set of responsibilities, as described herein. Known methods or systems do not separate the roles of Staffing Manager and Candidate Manager. Known methods or systems do not verify the authority of a user to make changes in a plan based on the user's role and the timing of the user's change within the program plan. As generally used herein, the word "task" may refer to a general responsibility or concrete task (such as a structural element of a project). Furthermore, the word "role" may describe a person's job (for example role as candidate or staffing manager) or may describe a structural element of a project.

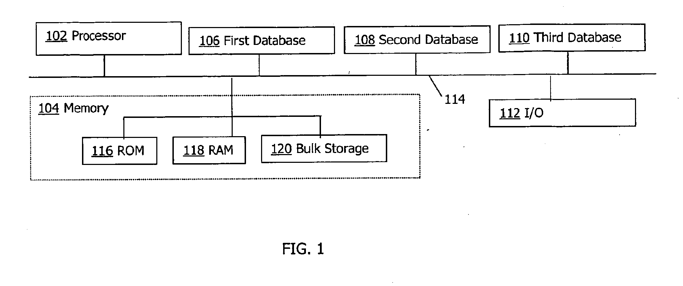

FIG. 1 is a simplified block diagram of a system in accordance with an embodiment of the invention. The system 100 is illustrated as including a processor 102, a memory system 104, a first database 106 (alternatively referred to herein as a program plan database 106), a second database 108 (alternatively referred to herein as an authentication database 108), a third database 110 (alternatively referred to herein as a candidate database 110), an input/output (I/O) unit 112. A communications bus 114 may couple all components and/or units or subunits of the system 100. The processor 102 may be any of a plurality of conventional processing systems, including microprocessors, digital signal processors, and field programmable logic arrays. In some applications, it may be advantageous to provide multiple processors (not shown) in the system 100. The processor(s) 102 may execute program instructions stored in the memory system 104. The memory system 104 may include any combination of conventional memory circuits, including electrical, magnetic or optical memory systems. As shown in FIG. 1, the memory system may include read only memories 116, random access memories 118, and bulk storage 120. The memory system not only stores the program instructions representing the various methods described herein but also can store the data items on which these methods operate. For example, the first, second, and/or third databases 106, 108, 110 may be stored in the memory system 104. Alternatively, the first, second, and/or third databases 106, 108, 110 may be located in a remote location from a platform that includes the processor 102.

The first database 106 may include a description of a program plan (to be described below). The second database 108, may include information to identify which user in a plurality of users has been granted the authority of a Project Planner, which user in the plurality of users has been granted the authority of a Candidate Manager, and which user in the plurality of users has been granted the authority of a Staffing Manager. The third database 110 may include a description of a universe of candidates for possible placement as staff in any given project plan. The I/O unit 118 may permit communication with external devices (not shown). For example, the I/O unit 118 may allow a user to input or read data from the first, second, and/or third databases 106, 108, 110.

Rules governing access to databases may be stored in memory or in any database. Table 1 illustrates one possible set of rules.

**TABLE 1**

| USER (Identified by User Role) | STAFFING STATE | AUTHORIZED TO MODIFY PROJECT PLAN |
|---|---|---|
| Project Planner | Staffing in Preparation | Yes |
| Project Planner | Staffing in Process | No |
| Project Planner | Staffing Completed | Yes |
| Staffing Manager | Staffing in Preparation | No |
| Staffing Manager | Staffing in Process | Yes |
| Staffing Manager | Staffing Completed | No |
| Candidate Manager | Staffing in Preparation | No |
| Candidate Manager | Staffing in Process | No |
| Candidate Manager | Staffing Completed | No |

During the course of the program planning cycle, a user having an assigned role may or may not be able to gain access to any given database based on the user's role and a staffing state. In accordance with one embodiment, a grant of authority to modify a database is preceded by the system's examination of a set of rules (such as those of Table 1) that dictate whether a user has authority to modify the database, as a function of the program plan's staffing state.

By way of background, a professional business process may have five stages: the opportunity management, project structuring, resource searching, staffing, and project execution stages. The work responsibilities of each of a Project Planner, Candidate Manager, and Staffing Manager preferably are separated to restrict responsibility to just one of the professional business process stages. Preferably, the Project Planner role is associated with the project structuring stage; the Candidate Manager role is associated with the resource searching stage; and the Staffing Manager role is associated with a staffing stage. Accordingly, it is noted that the Project Planner preferably cannot perform any action that is related to resource searching or staffing; the Candidate Manager preferably cannot perform any actions related to project structuring or staffing; and the Staffing Manager preferably cannot perform any actions related to project structuring or resource searching.

The Project Planner is preferably responsible for creating and maintaining a project. Two sub-roles may fall under the Project Planner role. First, the Project Planner is responsible for the creation of a project structure. For example, the project may take on a structure of multiple phases, or it may take on a structure of multiple tasks. These phases and/or tasks may be implemented sequentially, in parallel, or in combinations thereof in accordance with practices known to those of skill in the art. The Project Planner may also be responsible for defining each of the attributes for the individual phases or tasks defined in the project structure. Second, the Project Planner may be responsible for the creation of project roles. Project roles may define, for example, a required period and/or an amount of required effort (e.g., in hours, weeks, or money spent) and/or what tasks the project role is working on (with definition of period and effort). The Project Planner may be responsible for determining the required qualifications of a resource to be assigned to a particular role. The Project Planner may define task assignments. In one embodiment, the Project Planner manually-enters information to define the project structure and project roles. Menus or other user selectable lists of options may be provided to allow the Project Planner to input information to define the project structure and project roles. As used herein, "staffing" may be defined as an assignment of resources to project roles.

The Candidate Manager may be responsible for identifying adequate resources. Within his responsibility, the Candidate Manager may search for resources taking into account the conditions deigned by the Project Planner (e.g., criteria defined and associated with project roles that are to be staffed). The Candidate Manager may be assigned to certain organizational areas. Furthermore, the Candidate Manager role may be shared by a plurality of Candidate Managers.

The Staffing Manager may be responsible for assigning resources to the project roles predefined by the Project Planner. That is, he may be responsible for staffing of the project roles. A Staffing Manager is preferably a person that has knowledge of human resources. The Staffing Manager may use candidate proposals generated by the Candidate Manager. The Staffing Manager may be assigned to certain organizational areas. Furthermore, the Staffing Manager role may be shared by a plurality of Staffing Managers.

It is noted that the term project may be used to refer to any undertaking requiring concerted effort. As such, a project may include a series of undertakings (e.g., phases or tasks) that culminate in the creation of physical hardware, software, reports, provisions of services, etc. For example, a marketing campaign may be considered a project. A Project Planner may divide the marketing campaign into phases or tasks, such as expert analysis, expert report generation, focus group evaluation, post focus group analysis, marketing material production, and marketing material delivery. The Project Planner may identify the project roles by defining the required period for each task, assigning the task to project roles, deriving the required effort, period, and qualification of the project role by the accumulated tasks' efforts, periods, and qualifications. Additionally, the project planner may define qualifications of a project role independently from the task assignments. These examples are meant to be illustrative and not limiting.

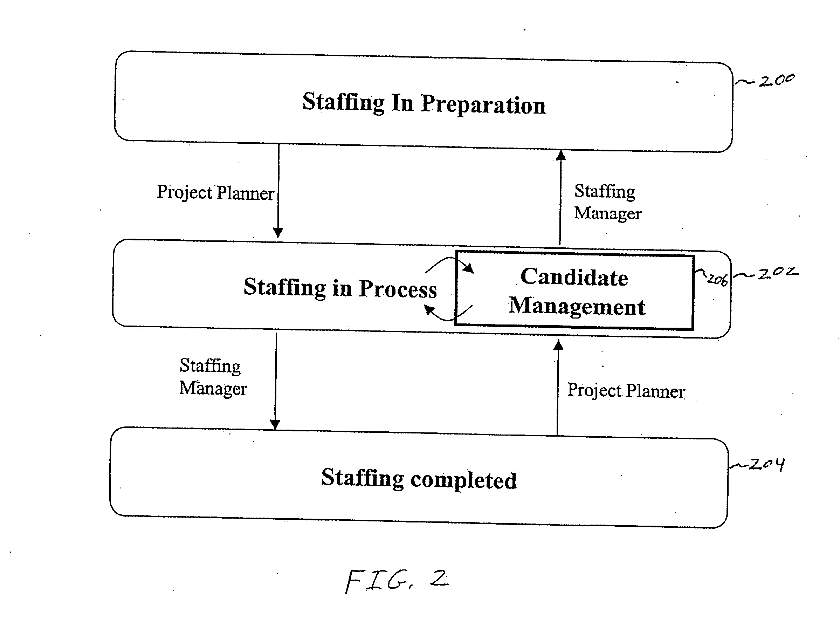

FIG. 2 illustrates the states of a project role within a staffing process in accordance with an embodiment of the invention. The states are divided into three phases. Namely, Staffing in Preparation 200, Staffing in Process 202, and Staffing Completed 204. The illustration of FIG. 2 provides a visual diagram that depicts the system states wherein a system in accordance with the invention may authorize a Project Planner, Staffing Manager, and Candidate Manager to modify any number of databases (such as databases 106, 108, 110 of FIG. 1).

During the "Staffing in Preparation" 200 staffing state, a system, in accordance with a set of rules, such as those defined in Table 1, may allow a user identified as the Project Planner to modify a first database (similar to the first database 106, FIG. 1). Wherein the first database includes data that defines the project structure and project roles. After the Project Planner has completed his responsibilities, the system may set a staffing state to "Staffing in Process" 202. Of course, the transition in system state may be initiated by the Project Planner, who, in accordance with the rules (such as those of Table 1) would have authority during the Staffing in Preparation state to alter the system's staffing state.

During the "Staffing in Progress" staffing state, a system in accordance with a set of rules, such as those defined in Table 1, may allow a user identified as the Staffing Manager to gain access to the first database in order to permit modification of the database by at least insertion of the identities of entities to staff the project roles stored in the first database. These roles were, as previously mentioned, predefined by the Project Planner.

It is noted that the Staffing in Process phase preferably includes a Candidate Management phase. Accordingly, during the system state identified as Staffing in Process 202, the system may allow a user identified as the Candidate Manager to view a database that includes the identification and qualifications of all entities available for employment or a subset thereof. Such a database may be similar to the candidate database 110 of FIG. 1.

Additionally, the system may automatically filter the candidate database 110 based on criteria (such as employment qualifications) set in the first database. The system may further display the results of the filtration to the user identified as the Candidate Manager. The system may allow the Candidate Manager to modify the first database by at least adding resources as candidates to any predefined project role. Thus, the Staffing Manager may staff the project roles predefined by the Project Planner using candidate proposals offered by the Candidate Manager. However, in an alternative embodiment, the Candidate Management 206 phase is optional.

The optional aspect of the Candidate Management 206 phase results in situations where a Staffing Manager 118 has knowledge of the resources available to him and determines that proposals from a Candidate Manager 116 may be unnecessary. In this case the Staffing Manager 118 may directly assign his resources to the project role and does not need the Candidate Manager 116 to make proposals of resources.

At a certain point in time, the system may change the system state flag to "Staffing Completed" 204. Of course, the system may change the state of the state flag based on an input from the Staffing Manager. For example, after the work of the Staffing Manager and Candidate Manager are completed, the Staffing Manager may set the state of the staffing process to "Staffing Completed" 204.

Once the system has attained a state of Staffing Completed, the system may again allow the user identified as the Project Planner to review the first database. That is the system may allow the Program Planner to review the resources assigned to the project roles as identified in the first database. If modification of assignments is necessary, the system can reset the state to Staffing in Process 202 and preferably may facilitate the transmission of comments to the Staffing Manager and/or the Candidate Manager from the Project Planner. Thus, the Staffing Manager and/or the Candidate Manager will be afforded an opportunity to address any issues with, for example, selection or assignment of resources.

Likewise, while in the Staffing in Process 202 phase, the system can reset the state to Staffing in Preparation 200. Such a reset in state may result from an input to the system from the Staffing Manager. In a preferred embodiment, the system may facilitate the transmission of comments to the Project Planner. Thus, the Project Planner may be afforded an opportunity to adjust any project role in question.

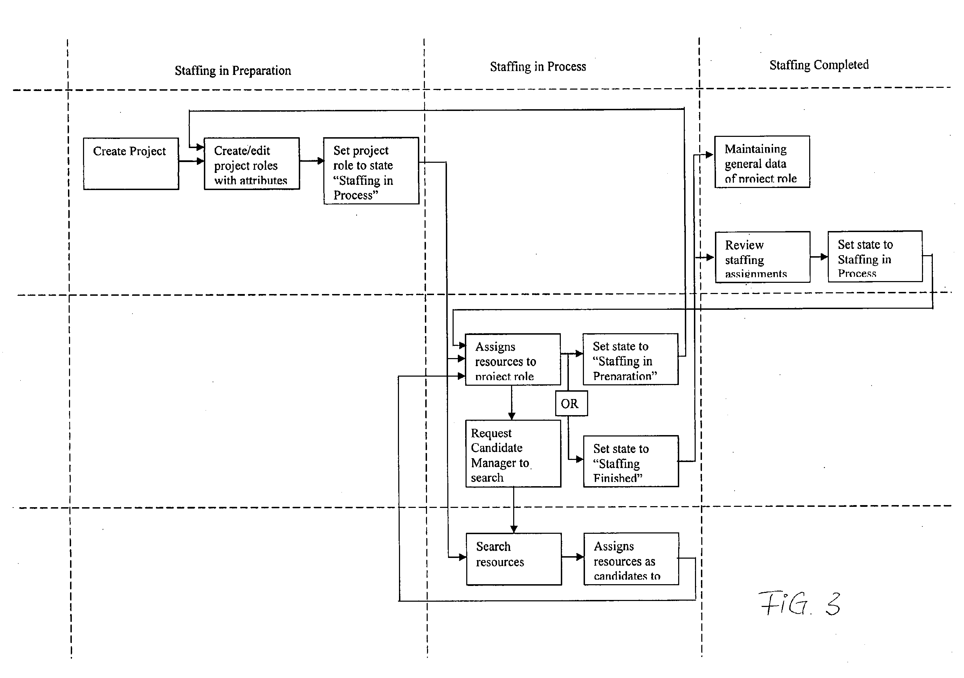

FIG. 3 is a flow diagram 300 of an exemplary scenario of a staffing process in accordance with an embodiment of the invention. The diagram of FIG. 3 illustrates one example of the actions that a system in accordance with the invention may take and the evaluations of authority exercised by the system during each of the states of the staffing process. In particular, it should be noted that the system will make use of a set of rules (such as those of Table 1) to verify that a user has authority to perform a task based on the staffing state of the system at the time the user attempts to exercise the system to perform the task. It is noted that a depiction of a rule set has been omitted from FIG. 3 in order to make the figure more readable. In the illustration of FIG. 3, users' roles are illustrated in the left most column. Each row is illustrated as including only those tasks associated with the role of the user identified in the left most column of the row. As illustrated, the system (such as system 100 FIG. 1) will not authorize a user in a first row (e.g., row 302 illustrated as embodying the role of Project Planner) to perform a task associated with a user in another row (e.g., rows 314 or 320 illustrated-as embodying the roles of Staffing Manager and Candidate Manager, respectively)

At 302, a project plan may be initiated by a processor. The processor may be a processor 102 as illustrated in FIG. 1. At 304, a staffing process state of "Staffing in Progress" would preferably be set at project initiation. At 306, an authorization database, or other memory location, may be populated with an identity of a Project Planner, who has authority to create and modify the project plan. The authorization database may be similar to the authorization database 108 of FIG. 1. Identities of other users that have authorization to perform various tasks associated with the program planning process, such as Staffing Manager and Candidate Manager, may also be populated into the authorization database. An initial project plan template may be stored in a database or other memory location, such as project plan database 106 of FIG. 1. Requests to create project roles may be processed by the processor 102 of FIG. 1.

As illustrated in FIG. 3, the system, after evaluation of a rule set (such as the rule set of Table 1) may permit a Project Planner 302 to create a project 304 while the state of the staffing process is set to Staffing in Preparation 306. After creating the project 304, he may create project roles with certain attributes 308. That is, he may define the requirements for each project role. Next, at 310, the Project Planner may set the project role to the state of Staffing in Process.

Once the state of the project role has been changed from Staffing in Preparation 306 to Staffing in Process 312, the system, after evaluation of a rule set (such as the rule set of Table 1) may permit a Staffing Manager 314 to assign resources to the project role 316. Optionally, if the Staffing Manager 314 does not have a candidate for a resource required to fill a project role, the Staffing Manager 314, at 317, may request a Candidate Manager 320 to search for adequate resources based on the project role defined by the Project Planner 302. Alternatively, at 318, once the state has been set to Staffing in Process 312, the Candidate Manger 320 may search for adequate resources based on the project role defined by the Project Planner 302. As a result of the Candidate Manager's 320 search for resources at 318, the system, after evaluation of a rule set (such as the rule set of Table 1) may permit the Candidate Manager 320, to assign resources as candidates to the project role at 322.

Returning to 316, the system, after evaluation of a rule set (such as the rule set of Table 1) may permit the Staffing Manager 314 to use the proposal(s) of the Candidate Manager 320 to staff the project role predefined by the Project Planner 302.

At 324, the system, after evaluation of a rule set (such as the rule set of Table 1) may permit the Staffing Manager 314 to reset the state of the project role to Staffing in Preparation 306 and the process would return to 308, where the system, after evaluation of a rule set (such as the rule set of Table 1) may permit the Project Planner 302 to edit the project role. In the case where the Staffing Manger resets the state to Staffing in Preparation, in a preferred embodiment, the system may prompt or otherwise enable the Staffing Manager to send comments (not shown) concerning, for example, questions about the project role defined by the Project Planner to the Project Planner. If, however, at 316, the system, after evaluation of a rule set (such as the rule set of Table 1) permits the Staffing Manager 314 to assign resources to a project role, then at 326, the Staffing Manager may set the project role state to Staffing Completed 328.

Once the state of the project role has been changed from Staffing in Process 312 to Staffing Completed 328, the system, after evaluation of a rule set (such as the rule set of Table 1) may permit the Project Planner to review the staffing assignments at 330. A review of the staffing assignments may lead the Project Planner to question the project assignments and consequently, at 332 the Project Planner 302 may set the state of the project role to Staffing in Process 312 causing a return of the process to 316, where the system, after evaluation of a rule set (such as the rule set of Table 1) may permit the Staffing Manager 314 to reevaluate an assignment of a resource to the project role. In a preferred embodiment, the system may prompt or otherwise enable the Project Planner 302 to send comments concerning, for example, his doubts to the Staffing Manager and/or the Candidate Manager. If, however, the state of the project role is set to Staffing Completed 328, then the Project Planner may alternatively choose to maintain general data of the project role at 334. By maintaining general data, it is meant that the Project Planner can preferably change only those attributes of the project role that are not attributes relevant for the staffing process.

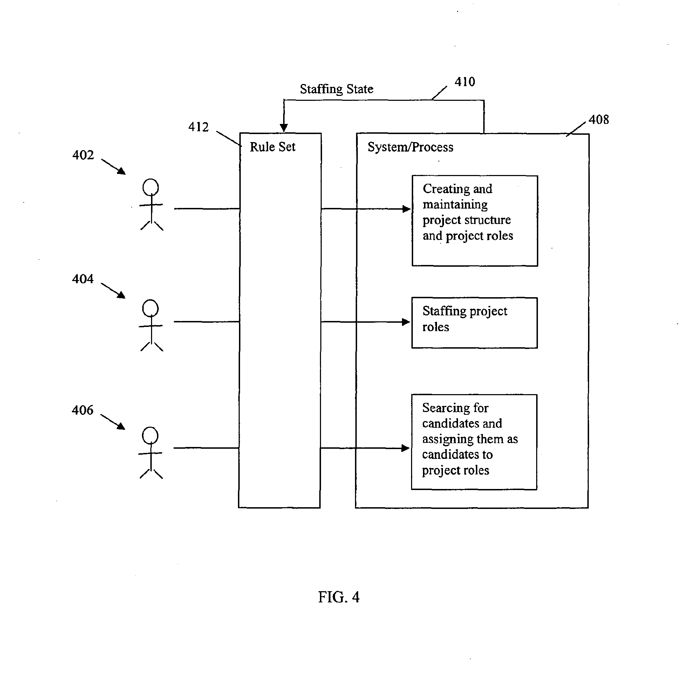

FIG. 4 is an illustration of a use case diagram of a staffing process with distributed responsibilities in accordance with an embodiment of the invention. In the illustration of FIG. 4, three persons have individual and non-shared responsibilities. A first person 402 is a Project Planner, a second person 404 is a Staffing Manager, and a third person 406 is a Candidate Manager. A system or process in accordance with an embodiment of the invention 408 may provide a staffing state 410 to a rule set 412 (such as the rule set of Table 1) for processing. Example 1, below, depicts one embodiment of this distributed scenario where candidate management is implemented. Example 2, below, depicts one embodiment of this distributed scenario where candidate management is not implemented.

### EXAMPLE 1

| Step | | Action |
|---|---|---|
| 1. | | The project planner creates the project. |
| 2. | | The system assigns the administration authorization to the project planner. |
| 3. | | The project planner creates project roles with: |
| | o qualifications | |
| | o cost and revenue rate | |
| | o timeframe | |
| 4. | | The system determines the organizational unit of the responsible candidate manager. |
| | The candidate managers belonging to the determined organizational unit get candidate management authorization for this project role by the system. The determined organizational unit is displayed to the project planner. | |
| 5. | | The system determines the organizational unit of the responsible staffing manager. |
| | The staffing managers belonging to the determined organizational unit get staffing management authorization for this project role by the system. The determined organizational unit is displayed to the project planner. | |
| 6. | | The project planner sets the state to "staffing in process" at the project role |
| | (only possible if staffing manager is specified). | |
| | | → the project role is released for the staffing process |
| | | → the project planner is not allowed anymore to make changes at the project role |
| 7. | | The project planner saves and leaves the project. |
| 8. | | The staffing manager opens his/her worklist. |
| 9. | The system selects all project roles in the state "staffing in process" the user (as staffing manager) is assigned to. He or she can be assigned in two ways: | |
| | | 1. personally (the role is assigned directly to that staffing manager); or |
| | | 2. via the organizational unit to which the user belongs to as a staffing manager (wherein other staffing managers of that organizational unit also see the role in their worklists). |
| 10. | | The staffing manager selects a project role from his worklist. |
| 11. | | The system opens the belonging project role, locks the project role and displays the |
| | selected project role in change mode. | |
| 12. | | The staffing manager has no adequate resources in mind and delegates the project |
| | role to the candidate manager. | |
| 13. | | The staffing manager saves and leaves the project role. |
| 14. | | The system unlocks the project role. |
| 15. | | The candidate manager opens his/her worklist. |
| 16. | The system selects all project roles in the state "staffing in process" the user (as candidate manager) is assigned to. He or she can be assigned in two ways: | |
| | | 1. personally (the role is assigned directly to that candidate manager); or |
| | | 2. via the organizational unit to which the user belongs to as a candidate manager (wherein other candidate managers of that organizational unit also see the role in their worklists). |
| 17. | | The candidate manager selects a project role from his worklist. |
| 18. | | The system opens and locks the project role and displays the selected project role in |
| | change mode. | |
| 19. | | The candidate manager executes a resource search for the given project role. He |
| | considers especially the qualifications and the availability of the candidates (in addition to the given project role attributes) as relevant requirements. | |
| 20. | | The system determines the resources that belong to the subset of resources the |
| | candidate manager is responsible for. Therefore the system evaluates a special relation (like "is candidate manager for...'') that connects the business partner object (representing the candidate manager) with organizational units. In doing so the system also performs a structural authorization check. All the resources that are assigned to these organizational units and to all subjacent organizational units make up a subset of resources that can be considered as potential candidates. | |
| 21. | | Out of the subset of resources (see 20) the system determines the candidates that fit |
| | to the specified requirements (see 19) and presents the result in a list. | |
| 22. | | If the candidate manager was able to find adequate resources in the result list, he |
| | adds them as candidates to the project role. | |

| BEGIN OPTIONAL | | |
|---|---|---|
| 23. | | If the responsibility for candidate management of the project role is by now only |
| | specified via the organizational assignment the candidate manager can take the project role on his name (via clicking on a button). From this point on the project role would not be visible in the worklists of other candidate managers. | |

| END OPTIONAL | | |
|---|---|---|
| 24. | | The candidate manager contacts the candidate (resource) and the line manager of |
| | resource in order to know whether the candidate is available for the forthcoming assignment (approval). This happens offline, e.g., via mail message that also contains a hyperlink to access the project role directly. | |
| 25. | | The candidate manager remarks at the candidate that he/she has been informed |
| | about the planned staffing. | |
| | | Additionally he may set an additional ranked attribute in order to provide a quick and |
| | direct information regarding the process of the planned staffing of the candidate. | |
| | | The steps 19 to 25 can reiterate (indefinite number). |
| 26. | | The candidate manager saves and leaves the project role. |
| 27. | | The system unlocks the project role. |
| 28. | | The candidate manager receives the answer (offline; e.g., via mail message) that the |
| | resource is available and suitable (or not available/ not suitable). | |
| 29. | | If the candidate manager receives the answer via e-mail with a link to the regarding |
| | project role he/she opens the project role directly via the link in the e-mail. | |

| BEGIN ALTERNATIVE TO 29 | | |
|---|---|---|
| 30. | | The candidate manager opens his/her worklist. |
| 31. | The system selects all project roles in the state "staffing in process" the user (as candidate manager) is assigned to. He or she can be assigned in two ways: | |
| | | 1. personally (the role is assigned directly to that candidate manager); or |
| | | 2. via the organizational unit to which the user belongs to as a candidate manager (wherein other candidate managers of that organizational unit also see the role in their worklists). |
| 32. | The candidate manager selects the belonging project role from his worklist. | |

| END ALTERNATIVE TO 29 | | |
|---|---|---|
| 33. | | The system opens and locks the belonging project role and displays the selected |
| | project role in change mode. | |
| 34. | | Referring to the answers from the resource and his line manager the candidate |
| | manager adds a note to the candidate, indicating that he is available and suitable for the belonging project or not. | |
| | | Additionally he may set an additional ranked attribute in order to provide a quick and |
| | direct information regarding the process of the planned staffing of the candidate. | |
| 35. | | If the candidate manager thinks that there are enough candidates he sets a flag at |
| | the belonging project role that indicates that the resource search process is finished from his point of view. The project role disappears from the candidates' worklist. | |
| 36. | | The candidate manager saves and leaves the project role. |
| 37. | | The system unlocks the project role. |
| 38. | | The staffing manager opens his worklist. |
| 39. | The system selects all project roles in the state "staffing in process" the user (as a staffing manager) is assigned to. He or she can be assigned in two ways: | |
| | | 1. personally (the role is assigned directly to that staffing manager); or |
| | | 2. via the organizational unit to which the user belongs to as a staffing manager (wherein other staffing managers of that organizational unit also see the role in their worklists). |
| 40. | | The staffing manager selects a project role from his worklist. |
| 41. | | The system opens and locks the belonging project role and displays the selected |
| | project role in change mode. | |

| BEGIN OPTIONAL | | |
|---|---|---|
| 42. | | The staffing manager contacts the customer/resources/line manager of resource and |
| | other persons in order to know whether the resource can be considered for the forthcoming assignment (approval). This happens offline, e.g., via mail message that also contains a hyperlink to access the project role directly. | |
| 43. | | The staffing manager adds a note to the candidate indicating that the |
| | customer/resources/line manager of resource and other persons are informed about the planned staffing. | |
| | | Additionally he may set an additional ranked attribute in order to provide a quick and |
| | direct information regarding the process of the planned staffing of the candidate. | |
| 44. | | The staffing manager leaves the project role. |
| 45. | | The system unlocks the project role. |
| 46. | | The staffing manager receives the answer (offline; e.g. via mail message) that the |
| | resource is available and suitable (or not available/ not suitable). | |
| 47. | | If the staffing manager receives the answer via e-mail with a link to the regarding |
| | project role he/she opens the project role directly via the link in the e-mail. | |

| BEGIN ALTERNATIVE TO 47 | | |
|---|---|---|
| 48. | The system selects all project roles in the state "staffing in process" the user (as a staffing manager) is assigned to. He or she can be assigned in two ways: | |
| | | 1. personally (the role is assigned directly to that staffing manager); or |
| | | 2. via the organizational unit to which the user belongs to as a staffing manager (wherein other staffing managers of that organizational unit also see the role in their worklists). |
| 49. | | The staffing manager selects the belonging project role from his worklist. |

| END ALTERNATIVE TO 47 | | |
|---|---|---|
| 50. | | The system locks the project role and displays selected project role in change mode. |

| END OPTIONAL | | |
|---|---|---|
| 51. | | Depending on the received answer the staffing manager may add a note to the |
| | belonging candidate. | |
| | | Additionally he may set an additional ranked attribute in order to provide a quick and |
| | direct information regarding the process of the planned staffing of the candidate. | |
| 52. | | If all relevant criteria are fulfilled the staffing manager assigns the resource(s) directly to |
| | the project role (staffing). | |
| 53. | | Depending on the decision (assignment / rejection) the staffing manager informs the |
| | belonging candidates (for example via e-mail). | |

| BEGIN OPTIONAL | | |
|---|---|---|
| 54. | | If the responsibility for staffing of the project role is by now only specified via the |
| | organizational assignment the staffing manager can take the project role on his name (via clicking on a button). From this point on the project role would not be visible in the worklists of other staffing managers. | |

| END OPTIONAL | | |
|---|---|---|
| 55. | | If the project role is staffed sufficiently the staffing manger sets the state "staffing |
| | completed" at the project role. | |
| 56. | | The staffing manager saves and leaves the project role. |
| 57. | | The system unlocks the project role. |

### EXAMPLE 2

| Step | | Action |
|---|---|---|
| 1. | | The project planner creates the project |
| 2. | | The system assigns the administration authorization to the project planner. |
| 3. | | The project planner creates project roles with: |
| | o qualifications | |
| | o cost and revenue rate | |
| | o timeframe | |
| 4. | | The system determines the organizational unit of the responsible candidate manager. |
| | The candidate manager gets candidate management authorization for this project role by the system. The responsible candidate manager is displayed to the project planner. | |
| 5. | | The system determines the organizational unit of the responsible staffing manager. |
| | The staffing manager gets staffing management authorization for this project role by the system. The responsible staffing manager is displayed to the project planner. | |
| 6. | | The project planner sets the state "staffing in process" at the project role (only |
| | possible if staffing manager is specified). | |
| | | → the project role is released for the staffing process |
| | | → the project planner is not allowed anymore to make changes at the project role |
| 7. | | The project planner saves and leaves the project. |
| 8. | | The staffing manager opens his/her worklist. |
| 9. | The system selects all project roles in the state "staffing in process" the user (as staffing manager) is assigned to. He or she can be assigned in two ways: | |
| | | 1. personally (the role is assigned directly to that staffing manager); or |
| | | 2. via the organizational unit to which the user belongs to as a staffing manager (wherein the other staffing managers of that organizational unit also see the role in their worklists). |
| 10. | | The staffing manager selects a project role from his worklist. |
| 11. | | The system opens and locks the belonging project role and displays the selected |
| | project role in change mode. | |
| 12. | | The staffing manager has adequate resources in mind. |

| BEGIN OPTIONAL | | |
|---|---|---|
| 13. | | The staffing manager contacts customer/resources/line manager of resource and |
| | other persons in order to know whether the resource can be considered for the forthcoming assignment (approval). This happens offline, e.g., via mail message that also contains a hyperlink to access the project role directly. | |
| 14. | | The staffing manager leaves the project role. |
| 15. | | The system unlocks the project role. |
| 16. | | The staffing manager receives the answer (offline; e.g., via mail message) that the |
| | resource is available and suitable (or not available/ not suitable). | |
| 17. | | If the staffing manager receives the answer via e-mail with a link to the regarding |
| | project role he opens the project role directly via the link in the e-mail. | |

| BEGIN ALTERNATIVE TO 17 | | |
|---|---|---|
| 18. | | The staffing manager opens his/her worklist. |
| 19. | The system selects all project roles in the state "staffing in process" the user (as a staffing manager) is assigned to. He or she can be assigned in two ways: | |
| | | 1. personally (the role is assigned directly to that staffing manager); or |
| | | 2. via the organizational unit to which the user belongs to as a staffing manager (wherein other staffing managers of that organizational unit also see the role in their worklists). |
| 20. | | The staffing manager selects the belonging project role from his/her worklist. |

| END ALTERNATIVE TO 17 | | |
|---|---|---|
| 21. | | The system opens and locks the belonging project role and displays the selected project role in change mode. |

| END OPTIONAL | | |
|---|---|---|
| 22. | | If all prerequisites and approvals are fulfilled the staffing manager indicates that he |
| | wants to assign the selected resource(s) directly to the project role (staffing). | |
| 23. | | The system determines the resources that belong to the subset of resources the |
| | staffing manager is responsible for. Therefore the system evaluates a special relation (like "is staffing manager for...'') that connects the business partner object (representing the staffing manager) with organizational units. In doing so the system also performs a structural authorization check. All the resources that are assigned to these organizational units and to all subjacent organizational units make up a subset of resources that can be used to staff project roles. | |
| 24. | | If the resource selected by the staffing manager is to be found in the subset of |
| | resources he is responsible for, the system confirms the assignment to the project role. | |
| 25. | | The staffing manager informs the candidates via e-mail about the staffing or the |
| | rejection. | |

| BEGIN OPTIONAL | | |
|---|---|---|
| 26. | | If the responsibility for staffing of the project role is by now only specified via the |
| | organizational assignment the staffing manager can take the project role on his name (via clicking on a button). From this point on the project role would not be visible in the worklists of other staffing managers. | |

| END OPTIONAL | | |
|---|---|---|
| 27. | | If the project role is staffed sufficiently the staffing manager sets the state to "staffing |
| | completed" at the project role. | |
| 28. | | The staffing manager saves and leaves the project role. |
| 29. | | The system unlocks the project role. |

The disclosed embodiments are illustrative of the various ways in which the present invention may be practiced. Other embodiments can be implemented by those skilled in the art without departing from the spirit and scope of the present invention.

## Claims

1. A method of program planning, comprising:
evaluating a rule set, wherein the rule set defines an authority of a Project Planner to create at least one project role;
determining an organizational unit of a candidate manager;
determining an organizational unit of a staffing manager;
receiving a command from the project planner to set a state of the project role to a first state;
releasing the project role; and
disallowing the project planner to make changes to the project role while the state of the project role is in the first state.

2. The method of claim 1, wherein the project planner defines a project structure.

3. The method of claim 1 or 2, wherein the project planner has no staffing responsibility.

4. The method of anyone of the preceding claims, wherein the candidate manager is responsible for identifying a resource for the at least one project role.

5. The method of anyone of the preceding claims, wherein the staffing manager is responsible for assigning a resource to the at least one project role.

6. The method of anyone of the preceding claims, wherein the candidate manager and the staffing manager are separate persons.

7. The method of anyone of the preceding claims, wherein the project role comprises: qualifications, cost and revenue rate, and a timeframe.

8. The method of anyone of the preceding claims, wherein the determined organizational unit of one of the candidate manager and the staffing manager is displayed to the project planner.

9. The method of anyone of the preceding claims, wherein the setting of the state of the project role to the first state is only possible if a staffing manager is specified.

10. The method of anyone of the preceding claims, wherein the first state is "staffing in process."

11. A method of program planning, comprising:
displaying as a worklist all project roles having a state set to a first state and assigned to a staffing manager;
opening a project role from the worklist as selected by the staffing manager;
locking the project role and displaying the project role in a change mode; and one of:
delegating the project role to a candidate manager if a resource is not assigned to the project role by the staffing manager; and
receiving an assignment of a resource to the project role by the staffing manager.

12. The method of claim 11, wherein the first state is "staffing in process."

13. The method of claim 11 or 12, wherein the staffing manager is an individual.

14. The method of claim 11, wherein the staffing manager is an organizational unit comprising a plurality of staffing managers.

15. A method of program planning, comprising:
displaying as a worklist all project roles having a state set to a first state and assigned to a candidate manager, wherein each project role has associated therewith at least one requirement;
opening a project role from the worklist as selected by the candidate manager;
locking the project role and displaying the project role in a change mode;
determining a set of resources for which the candidate manager is responsible;
determining a subset of resources from the set of resources that fit the at least one requirement of the project role; and
displaying the subset of resources that fit the at least one requirement of the project role as a list.

16. The method of claim 15, wherein the first state is "staffing in process."

17. The method of claim 15 or 16, wherein the candidate manager is an individual.

18. The method of claim 15 or 16, wherein the candidate manager is an organizational unit comprising a plurality of candidate managers.

19. The method of anyone of claims 15 to 18, wherein the candidate manager performs a resource search for the project role.

20. The method of anyone of claims 15 to 19, wherein the at least one requirement is one of qualifications of candidates, availability of candidates, and a project role attribute.

21. The method of anyone of claims 15 to 20, wherein determining the set of resources comprises:
evaluating a relation that connects a business partner object with at least one organizational unit; and
only searching and finding within a set of resources the business partner object is allowed to see.

22. The method of claim 21, wherein the business partner object is represented by a candidate manager.

23. The method of anyone of claims 15 to 22, wherein the set of resources comprises all the resources that are assigned to organizational units connected to the business partner object and all subjacent organizational units.

24. The method of anyone of claims 15 to 23, further comprising:
receiving a selection, from the business partner object, of at least one resource that was presented on the list; and
adding the at least one resource as a candidate to the project role.

25. A method of program planning, comprising:
receiving a first command from a first user to modify a program structure;
evaluating a rule set, wherein the rule set specifies an authority of a first user to modify the program structure on a basis of a staffing state in a project planning process; and
modifying the program structure, as a result of a positive evaluation of the rule set,
wherein modification includes populating the program structure with first data comprising a project structure and a project role.

26. The method of claim 25, wherein the first user creates and maintains a project structure and a project role.

27. A method of program planning wherein the task of staffing a predefined role and the task of searching for at least one resource to staff the predefined role are performed by a first user and a second user, respectively.

28. The method of claim 27, wherein the first user is different from the second user.
